# DEMANDE DE BREVET EUROPEEN

(11) **EP 0 530 080 A1**
(43) Date de publication de la demande: **03.03.1993**
(21) Numéro de dépôt: 92402310.4
(22) Date de dépôt: 20.08.1992
(51) Int. Cl.: A01G 9/10

(54) **Procédé pour associer un végétal et une matière inerte**

(30) Priorité: 23.08.1991 FR 9110549
(71) Demandeur: Ouaki, Philippe Victor Haim, F-75003 Paris (FR)
(72) Inventeur: Ouaki, Philippe Victor Haim, F-75003 Paris (FR)
(74) Mandataire: Vander-Heym, Serge

(57) **Abrégé**

Procédé pour associer un végétal et une matière inerte consistant à obtenir une plante (1) et à la transférer dans un récipient tubulaire (2), contenant un substrat de culture, dont l'aspect extérieur reproduit les caractéristiques morphologiques d'un tronc réel ou imaginaire, la partie inférieure dudit récipient étant placée et maintenue dans un pot usuel (5) contenant, également, un substrat de culture et l'eau nécessaire à la vie de la plante.

## Description

La présente invention concerne un procédé pour associer un végétal et une matière inerte.

De nombreuses plantes ornementales présentent un intérêt tant au niveau de leur feuillage qu'à celui de leur tronc. Un exemple bien connu est celui des petits arbres cultivés en pots et dénommés "Bonzaï".

On sait que l'obtention d'un bonzaï présentant un tronc d'un diamètre important nécessite de nombreuses années. Une technique connue, pour pallier à cet inconvénient, consiste à tailler sévèrement des sujets normaux déjà âgés puis à les cultiver en pot. Mais une telle technique présente l'inconvénient de nécessiter de nombreux prélèvements dans la nature.

Le procédé de l'invention, qui remédie à ces inconvénients, consiste à obtenir une plante et à la transférer dans un récipient tubulaire, contenant une matière de culture, dont l'aspect extérieur reproduit les caractéristiques morphologiques du tronc de la plante, la partie inférieure dudit récipient étant placée et maintenue dans un pot usuel contenant, également, une matière de culture et l'eau nécessaire à la vie de la plante.

Par ce procédé, il est possible de donner l'illusion de la création d'espèces nouvelles en associant une plante d'une espèce donnée et un tronc artificiel reproduisant les caractéristiques du tronc d'une autre espèce. Il est même possible de réaliser des troncs artificiels issus de l'imagination de leur créateur.

Ce procédé offre, entre autres, l'avantage de permettre la commercialisation de produits identiques ce qui est impossible à obtenir avec des plantes cultivées de façon traditionnelle.

Pour produire des produits uniques, il est possible d'utiliser des troncs naturels, évidés et traités.

Comme le tronc artificiel présente une certaine hauteur, l'eau contenue dans le pot usuel ne peut pas monter par capillarité et atteindre les racines de la plante situées à la partie supérieure.

La présente invention apporte une solution à ce problème et le procédé de l'invention prévoit une phase initiale consistant à développer les racines de la plante pour que la longueur de celles-ci soit au moins égale à la hauteur du tronc artificiel devant la recevoir.

Selon l'invention, la plantule est mis en culture dans un tube, dont le diamètre est inférieur à celui de l'évidement du tronc artificiel, contenant un substrat connu pour favoriser l'enracinement et l'allongement des racines. La paroi du tube, de préférence transparent, contient les racines et les force à se diriger vers le bas.

Lorsque les racines ont atteint le développement désiré, on extrait la plante du tube et on transfère le boudin souple formé par l'enchevêtrement des racines et du substrat dans le tronc artificiel.

La présente invention sera mieux comprise par la description qui va suivre faite en se référant aux dessins annexés à titre d'exemple indicatif, seulement, sur lesquels :
- la figure 1 est une vue en coupe d'un ensemble ornemental vivant obtenu selon le procédé de l'invention;

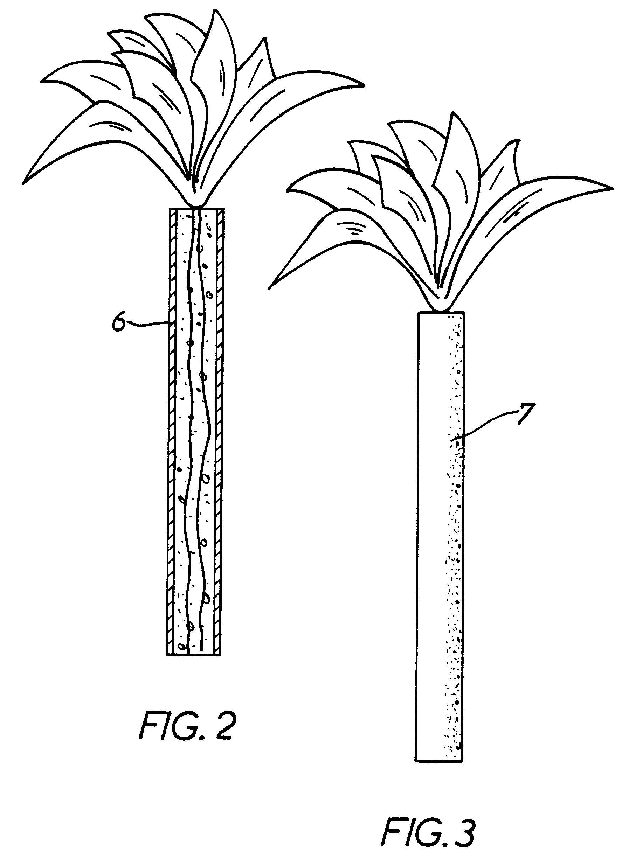

- les figures 2 et 3 illustrent, à plus petite échelle, la phase initiale du procédé.

En se reportant aux dessins, on voit que 1 désigne la plante et 2 un récipient tubulaire dans l'évidement 3 duquel sont engagées les racines 4 de ladite plante 1.

Le récipient 2 est obtenu, de préférence, en une matière moulée et il reproduit extérieurement les caractéristique morphologiques du tronc de l'espèce considérée c'est la raison pour laquelle, par la suite, il sera dénommé "tronc artificiel".

L'évidement 3 est comblé après mise en place de la plante 1 à l'aide d'un substrat nutritif naturel ou artificiel convenant à l'espèce à laquelle appartient ladite plante dont les racines s'étendent dans un pot 5, usuel, dans lequel est maintenue la partie inférieure du tronc artificiel 2.

Selon un mode de fixation, le tronc 2 présente, à sa base, des trous (non représentés), permettant, à l'aide de liens appropriés, d'assurer la stabilité de l'ensemble 1-2 dans le pot 5 durant le temps nécessaire au développement des racines dans la motte de substrat contenue dans ledit pot. Ainsi, par exemple, il est possible d'utiliser une plaque disposée contre le fond du pot et de relier cette plaque à la base du pot par l'entremise de tirants, la masse de la motte de substrat reposant sur ladite plaque assurant le maintien de l'ensemble.

Pour que l'eau contenue dans la masse de substrat du pot parvienne aux racines 4, il est nécessaire que celles-ci s'étendent, du moins partiellement, dans la dite motte, ou en soient très proche.

Compte tenu de la hauteur du tronc artificiel 2, une telle condition ne peut pas être réalisée avec une plantule obtenue par un moyen traditionnel de culture.

Selon l'invention, il est prévu une phase initiale permettant d'obtenir un allongement des racines.

A cet effet, les racines de la plantule sont engagées dans un tube 6 contenant un substrat nutritif connu pour favoriser l'enracinement. Un excellent résultat peut être obtenu en utilisant un substrat artificiel tel que celui décrit dans la demande PCT/FR/00079 déposée le 1er Février 1990 au nom de Monsieur Salah BARBARY.

Le diamètre intérieur du tube 6 est bien inférieur au diamètre de l'évidement 3 du tronc artificiel devant recevoir la plante et sa longueur est sensiblement égale à la hauteur du tronc 2.

De préférence, le tube 6 est transparent.

Lorsque les racines ont atteint le développement désiré, on extrait la plante du tube qui se présente alors sous la forme représentée sur la figure 3 c'est-à-dire qu'elle comporte un long boudin 7, formé par l'enchevêtrement des racines et du substrat.

Le boudin est alors introduit dans l'évidement 3 du tronc 2 et l'espace annulaire ménagé par la paroi interne dudit tronc et ledit boudin est alors comblé à l'aide d'un substrat approprié introduit par le haut c'est-à-dire selon le sens de propagation des racines.

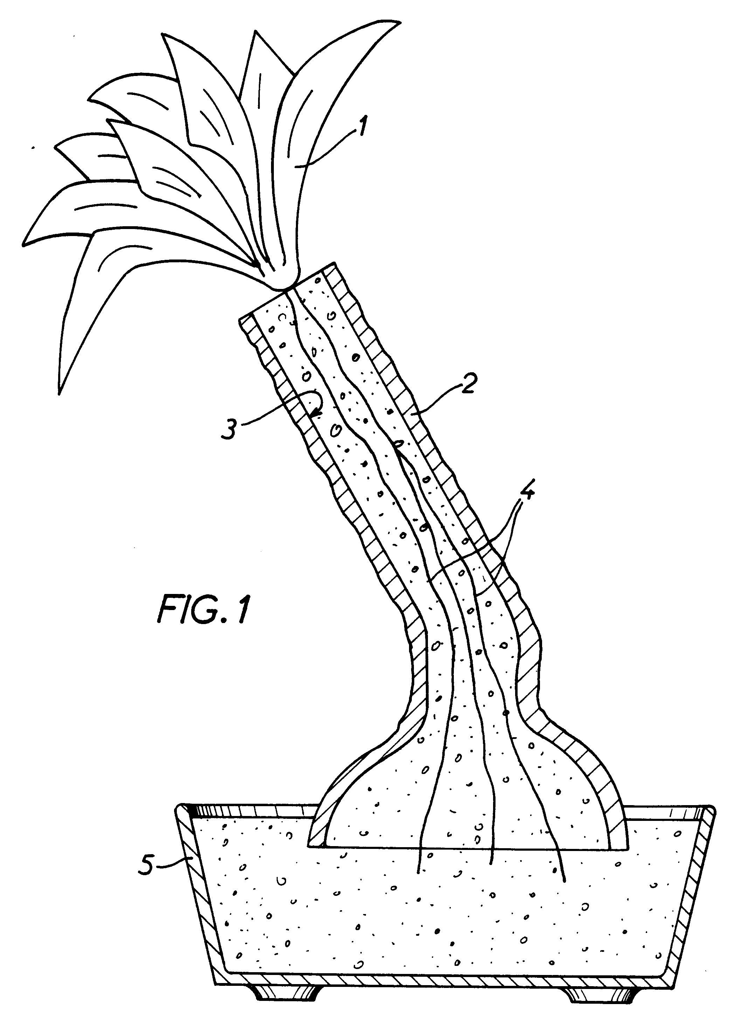

Le boudin 7 est naturellement souple et, de ce fait, il peut être introduit dans un évidement 3, curviligne, tel que celui de la figure 1.

Il faut signaler que la phase initiale peut démarrer à l'aide d'une plantule, comme décrit ci-dessus, ou à partir d'une plante ou d'un élément de plante.

Il faut signaler, aussi, que le pot 5 peut être dissimulé par la partie inférieure du tronc artificiel ou en faire partie intégrante.

Bien entendu, le tronc 2 peut présenter plusieurs évidements débouchant, vers la base du tronc, dans un évidement de plus grand diamètre.

## Revendications

**1-**Procédé pour associer un végétal et une matière inerte du genre de ceux consistant à transplanter une plante dans un récipient tubulaire, contenant un substrat de culture, dont l'aspact extérieur reproduit les caractéristiques morphologiques d'un tronc réel ou imaginaire dont la partie inférieure est placée et maintenue dans un pot usuel contenant, également un substrat de culture, caractérisé en ce que la plante est cultivée dans un tube (6) contenant un substrat de culture connu pour favoriser le développement des racines, en ce que lorsque les racines ont atteint le développement désiré, la plante est extraite dudit tube et en ce que l'enchevêtrement des racines et du substrat, qui se présente sous la forme d'un long boudin (7) , est introduit dans l'évidement (3) du tronc artificiel (2).

**2-**Procédé selon la revendication 1, caractérisé en ce que le diamètre interne du tube (6) est bien inférieur au diamètre de l'évidement (3) du tronc artificiel et en ce que sa longueur est sensiblement égale à la longueur dudit tronc.

**3-**Procédé selon la revendication 2, caractérisé en ce que le tube (6) est transparent.
